# FASCICULE DE BREVET EUROPEEN

(11) **EP 0 514 301 B1**
(45) Date de publication et mention de la délivrance du brevet: **13.01.1999**
(21) Numéro de dépôt: 92440048.4
(22) Date de dépôt: 23.04.1992
(51) Int. Cl.: G06T 7/00

(54) **Dispositif de traitement d'informations d'images linéaires de génératrices d'une pièce possédant un axe de révolution**
Vorrichtung zur Informationsverarbeitung von linearen Bildern der Mantellinien eines zylindrischen Teiles
Linear image information processing device of generatrices of a piece with a revolution axe

(30) Priorité: 24.04.1991 FR 9105364
(43) Date de publication de la demande: 19.11.1992
(73) Titulaire: ETABLISSEMENTS GILLES LEROUX, F-45470 Loury (FR)
(72) Inventeur: Bittar, Bachar, F-94340 Joinville (FR)
(74) Mandataire: Arbousse-Bastide, Jean-Claude Philippe

(56) Documents cités:
- US-A- 4 941 191
- PATENT ABSTRACTS OF JAPAN vol. 8, no. 237 (P-310)30 Octobre 1984
- PATENT ABSTRACTS OF JAPAN vol. 13, no. 50 (P-823)6 Février 1989

## Description

La présente invention concerne un dispositif de traitement d'informations d'images d'une pièce possédant un axe de révolution, s'appliquant en particulier à l'inspection de pièces usinées, de canettes, de boîtes de conserves.

Les dispositifs d'inspection de pièces de révolution connus à ce jour comportent généralement une caméra linéaire recevant une image d'une génératrice de la pièce en rotation et des seuils, généralement au nombre de deux, communs à tous les points photosensibles de la caméra linéaire, les dépassements de ces seuils provoquant un signal de défaut.

Ces dispositifs nécessitent un étalonnage initial pour chaque série de pièces identiques traitées et un ré-étalonnage à chaque changement de série. De plus, la lumière éclairant la pièce doit être uniforme en intensité et isotrope, sinon les reflets provoquent des détections de défauts d'éclairaqe et, en conséquence, un résultat d'inspection erroné.

Pour ces différentes raisons, les dispositifs de ce type se limitent à une inspection grossière, tolérant les défauts les moins marqués, de pièces relativement cylindriques qui ne présentent pas de réflexions convergentes. La quantité d'informations d'images à traiter au cours d'une inspection exclut, par ailleurs, l'usage de logiciels de traitement travaillant sur l'ensemble de ces informations.

Afin de remédier à ces inconvénients on a proposé, dans le document US-A-4 941 191, un dispositif de traitement d'informations d'images linéaires de génératrices d'une pièce possédant un axe de révolution, ledit dispositif comportant un capteur d'images linéaires possédant des points photosensibles, une mémoire et un calculateur adapté à calculer, pour chaque point du capteur d'images linéaire, des valeurs d'informations d'images provenant de ce point au cours d'une rotation complète de la pièce et à mémoriser dans la mémoire une série de combinaisons linéaires de toutes ces valeurs.

Toutefois ce dispositif est excessivement complexe et nécessite, pour permettre la détermination des défauts inacceptables, qu'une seconde rotation de la pièce inspectée soit complètement achevée.

La présente invention entend remédier a ces inconvénients en proposant un dispositif qui mémorise, pour chaque point photosensible du capteur d'images, la moyenne des luminosités observées au cours d'une rotation complète de la pièce inspectée et qui applique des seuils en fonction de cette moyenne.

Le dispositif selon l'invention permet ainsi le traitement en temps masqué de la pièce inspectée au cours de la seconde période de traitement, sans nécessiter que cette seconde période de traitement soit terminée.

La description qui va suivre, faite en regard du dessin annexé dans un but explicatif et nullement limitatif, permettra de mieux comprendre les avantages, buts et caractéristiques de la présente invention.

Dans le dessin annexé :
- la figure 1 représente schématiquement un système d'inspection de pièces de révolution incorporant le dispositif selon l'invention.
- la figure 2 représente un schéma électronique du dispositif selon l'invention.

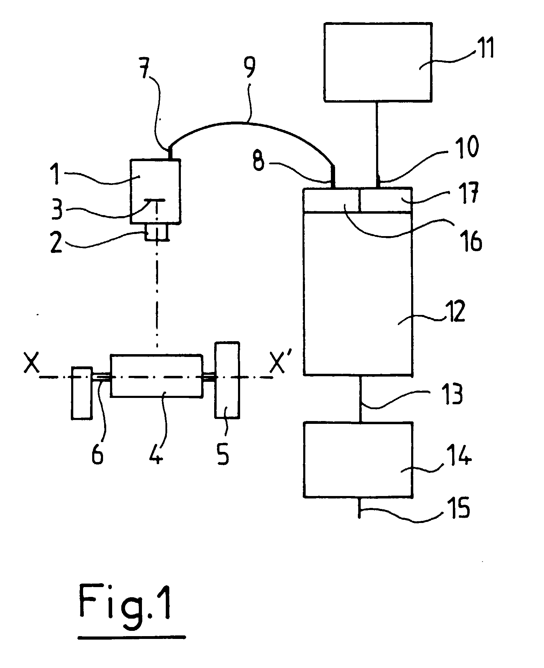

Si on se réfère d'abord à la figure 1, on voit sur cette figure une caméra linéaire 1 comportant un capteur d'images linéaire 3 et un objectif 2 formant une image d'une génératrice d'une pièce de révolution 4 sur le capteur d'images 3. La pièce 4, qui possède un axe de révolution XX', est supportée en rotation par un axe moteur 6 et entraînée en rotation par un moteur 5. Un connecteur de signaux électroniques 7 est relié, par l'intermédiaire d'un câble électrique 9, à une entrée de signaux 8 d'un convertisseur analogique-numérique 16 relié électriquement à une carte de traitement d'informations d'images 12. La carte de traitement d'informations d'images 12 est par ailleurs reliée, par l'intermédiaire d'un câble électrique 13, à un ordinateur 14 possédant des connecteurs 15, et à une carte de visualisation 17 elle-même reliée, par un connecteur 10, à un moniteur 11.

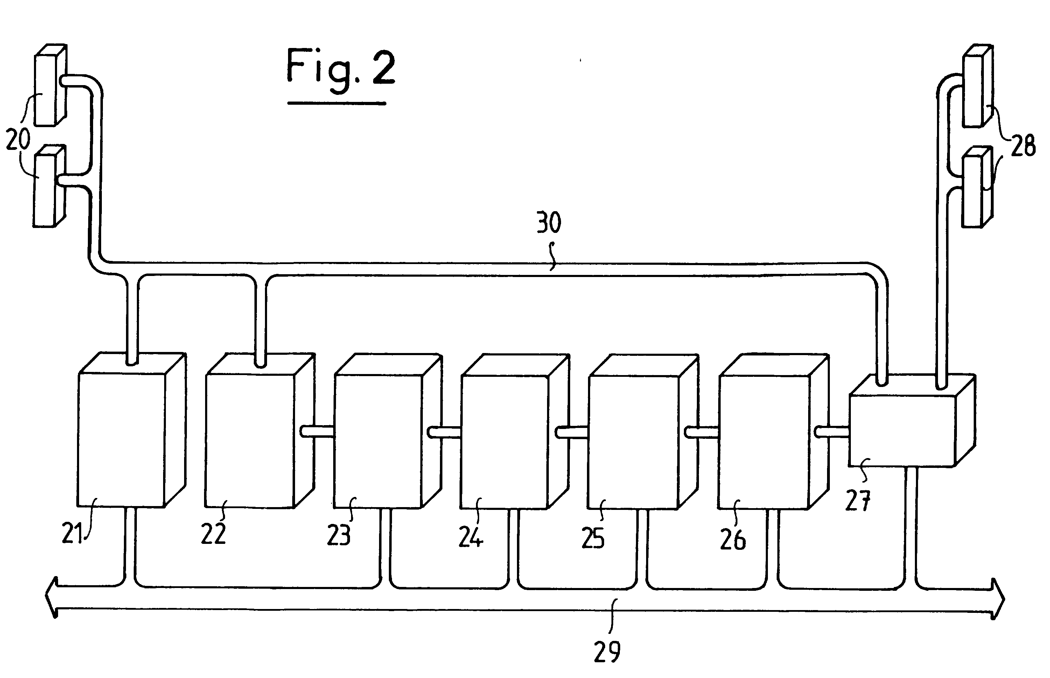

La caméra linéaire 1 est électronique, c'est-à-dire qu'elle fournit sur son connecteur 7 des signaux électroniques représentatifs de l'image reçue par le capteur d'images 3, lequel est linéaire et comporte des points photo-sensibles. L'objectif 2 est de type connu. Le capteur d'images 3 est parallèle à l'axe de révolution XX' de la pièce 4. Le moteur 5 et l'axe moteur 6 sont de types connus. Les autres éléments sont de types connus à l'exception de la carte de traitement d'informations d'images 12 qui est présentée en regard de la figure 2.

Cette carte 12 a pour fonction de détecter les défauts de la pièce 4 par traitement des informations qu'elle reçoit du convertisseur analogique-numérique 16. Ces défauts, ainsi que les images captées, peuvent être affichés sur le moniteur 11. L'ordinateur 14 est adapté à traiter les informations sortant de la carte 12 et à estimer la qualité de la pièce 4.

Si on se réfère à la figure 2, on voit un mode de réalisation de la carte de traitement d'informations d'images 12. Dans cette figure 2 sont représentés un connecteur d'entrée d'informations d'images 20 relié à un bus image 30, une mémoire d'images 21 reliée au bus image 30, une mémoire intermédiaire 22 elle aussi reliée au bus image 30, un calcultateur de moyenne 23 relié à la mémoire intermédiaire 22, une mémoire de moyenne et de sévérité 24 reliée au calculateur de moyenne 23, un calculateur de seuils 25 relié à la mémoire 24, un calculateur de franchissement de seuils 26 relié au calculateur de seuils 25, une mémoire intermédiaire de franchissements de seuils 27 reliée au calculateur de franchissements de seuils 26 et au bus image 30, un connecteur de sorties d'informations d'images 28 relié à la mémoire intermédiaire 27 et un bus système 29, relié aux composants référencés 21 et 23 à 27.

Le connecteur d'entrée d'informations d'images 12 connecte le convertisseur analogique-numérique 16, représenté en figure 1, à la carte 12. Le bus image 30 permet, en conséquence, le transfert d'informations numériques représentatives des intensités lumineuses captées par les points photo-sensibles du capteur d'images linéaire 3. La mémoire d'images 21 est adaptée à conserver toutes les informations d'images transitant par le bus image 30 au cours d'une rotation complète de la pièce 1, ainsi appelée première période de traitement, et à les restituer sur le bus image 30 au cours d'une seconde période de traitement. La mémoire intermédiaire 22 est de type mémoire à sommation, aussi appelée mémoire à accumulation. Elle conserve, pour chaque point du capteur d'images linéaire 3, la somme des valeurs numériques transitant par le bus image 30 et correspondant à ce point, au cours de la première période de traitement. La mémoire intermédiaire 22 effectue aussi la somme des images prises au cours de la première période de traitement. Le calculateur de moyenne 23 effectue, pour chaque point du capteur d'images linéaire 3, une division de la somme conservée dans la mémoire intermédiaire 22 par le nombre de prise de vues effectuées par le capteur d'images 3 au cours de la première période de traitement.

Le calculateur de moyenne 23 est constitué préférentiellement d'une table de conversion, généralement désignée par sa traduction anglaise "look-up table", dont la fonction de transfert est donnée par l'ordinateur 14.

La mémoire de moyenne et de sévérité 24 est adaptée à conserver les moyennes calculées par le calculateur de moyenne 23. Par ailleurs, l'ordinateur 14 charge dans cette mémoire 24, pour chaque point du capteur d'images 3, le numéro d'une table de sévérité choisie parmi plusieurs tables contenant chacune des taux de sévérité. Ces taux de sévérité sont préférentiellement exprimés en pourcentage de variation autour de la valeur moyenne et correspondent à des zones du capteur d'images 3 qui peuvent être paramétrées en longueur.

Le calculateur de seuils 25 calcule, en fonction des informations de moyenne et de sévérités contenues dans la mémoire 24, les valeurs numériques des seuils de valeur des signaux transitant par le bus image 30. Ces seuils, qui peuvent être nombreux pour chaque point du capteur d'images 3 sont, on le comprend, les produits pour chaque point de la moyenne des intensités lumineuses captées par ledit point et des taux de sévérité. Le calculateur de seuils est préférentiellement constitué d'autant de tables de conversion que le nombre maximal de seuils choisi.

La mémoire de seuils 26 est adaptée à conserver ces valeurs de seuils. Cette mémoire est préférentiellement de type table de conversion et les seuils calculés sont conservés comme fonction de transfert, les valeurs se trouvant entre deux seuils étant transformées, en sortie, en signaux de franchissement de seuils.

La mémoire intermédiaire de franchissement de seuil 27 possède deux fonctions. D'une part elle compare successivement, pour tous les points du capteur d'images 3, la valeur du signal numérique transitant par le bus image 30, avec les seuils fournis par la mémoire de seuils 26. D'autre part, elle ne mémorise que les numéros de points du capteur d'images 3 qui correspondent à un changement, par rapport au point précédent dudit capteur 3, des franchissements de seuils, en associant à ces numéros de points, appelés points de transition, le sens de franchissement de seuil et le numéro de seuil atteint après cette transition.

Le fonctionnement de cette mémoire intermédiaire 27 se fait donc au cours de la seconde période.

Les valeurs mémorisées dans la mémoire intermédiaire 27 sont transférées ultérieurement à l'ordinateur 14, en vue de leur traitement.

Par exemple, le nombre maximal de seuils attribués étant de quatre, le calculateur de seuil 25 comporte quatre tables de conversion. Si l'ordinateur 14 donne pour le point 1 les taux de sévérité 30 %, 60 %, 150 % et 200 %, il charge alors une table de sévérité numérotée 1 et attribue au point 1 le numéro de table de sévérité 1. La table de sévérité numérotée 1 correspond à quatre tables de conversion effectuant successivement la multiplication du nombre parvenant à leur entrée par les taux 0,3, 0,6, 1,5 et 2. La mémoire de seuils 26 comporte alors quatre mémoires adressées parallèlement qui conservent chacune pour le point 1 l'un des produits de la moyenne donnée, pour ce point, par la mémoire de moyenne 24 et de l'un des taux 0,3, 0,6, 1,5 ou 2. La mémoire intermédiaire de franchissement de seuil 27 comporte quatre comparateurs comparant ces produits avec la valeur numérique du signal correspondant à ce point et émet quatre signaux indiquant si la dite valeur numérique est supérieure ou inférieure à chacun de ces seuils. Les transitions, correspondant, entre deux points du capteur d'images successifs, à un changement de ces signaux, sont conservées dans la mémoire intermédiaire avec le sens de transition d'un seuil à l'autre et le seuil atteint après cette transition. De cette manière, les seules informations conservées dans la mémoire intermédiaire 27 sont, pour chaque ligne, les numéros des points correspondant à ces transitions, les sens de transition et les numéros de seuils atteints après ces transitions. Ces informations correspondent à des contours.

La première période de traitement correspondant à la rotation complète de la pièce 4, la seconde période correspond à la restitution par la mémoire d'images 21 des informations d'images qu'elle conserve.

Selon une variante, la seconde période correspond à une nouvelle rotation complète de la pièce 4 et à une nouvelle série de prises de vues par le capteur d'images 3.

Le bus système 29, relié à l'ordinateur 14, permet l'accès aux différentes mémoires et tables de conversion, ainsi qu'au pilotage des séquences de fonctionnement des composants électroniques de la carte 12 représentés en figure 2.

Le fonctionnement de la carte électronique présentée dans la figure 2 est simple. Il permet la sortie, de manière synchronisée avec les informations sortant de la mémoire 21, des signaux de franchissement qui correspondent à des défauts de pièce ou à des zones de marquage ou d'écriture.

L'ordinateur 14 est alors adapté à traiter ces informations pour estimer la qualité de la pièce 4, ou pour déchiffrer les écritures ou les signes qu'elle porte et pour trier en conséquence les pièces 4.

Un des avantages du dispositif objet de la présente invention tel que représenté dans la figure 2 est qu'il permet le traitement en temps masqué de la pièce 4 inspectée au cours de la seconde période de traitement puisque le traitement est alors effectué sur des images mémorisées dans la mémoire 21.

Il est à noter que le dispositif objet de la présente invention permet le traitement des contours et des surfaces : le traitement des contours en sortie de la mémoire intermédiaire 27, et le traitement des surfaces en sortie des comparateurs incorporés dans la mémoire intermédiaire 27.

## Revendications

1. Dispositif de traitement d'informations d'images linéaires de génératrices d'une pièce (4) possédant un axe de révolution, ledit dispositif comportant :
- un capteur d'images linéaires (3) possédant des points photosensibles ;
- une mémoire d'images (24) apte à conserver toutes les informations d'images provenant du capteur d'images linéaires (3) au cours d'une première période de traitement correspondant à une rotation complète de la pièce (4), et à les restituer au cours d'une seconde période de traitement succédant à la première ;
- une mémoire intermédiaire (22) adaptée à réaliser, pour chaque point photo-sensible du capteur d'images (3), la somme des valeurs des informations provenant de ce point au cours de la première période de traitement ;
- un calculateur (23) relié à la mémoire intermédiaire (22) et adapté à calculer, pour chaque point photosensible du capteur d'images linéaires (3), la valeur moyenne des informations d'images provenant de ce point au cours de la première période de traitement correspondant à une rotation complète de la pièce (4) ;
- une mémoire (24) reliée au calculateur (23) et apte à mémoriser lesdites valeurs moyennes ;
caractérisé en ce que la mémoire (24) est une mémoire de sévérité qui conserve pour chaque point photosensible du capteur d'images (3) un taux de sévérité exprimé en pourcentage de variation autour de la valeur moyenne conservée en mémoire.

2. Dispositif selon la revendication 1 caractérisé en ce qu'il comporte un calculateur de seuils (25) relié à la mémoire (24) et apte à calculer le nombre de seuils pour chaque point photosensible du capteur d'images linéaires en multipliant la valeur moyenne pour chaque point photosensible par le nombre de taux de sévérité correspondants.

3. Dispositif selon la revendication 1 ou la revendication 2, caractérisé en ce qu'il comporte :
- une mémoire de seuils (26) reliée au calculateur de seuils (25) et conservant au moins un seuil pour chaque point photosensible du capteur d'images linéaires (3) ;
- une mémoire intermédiaire de franchissement de seuils (27) reliée à la mémoire de seuils (26) et comportant au moins un comparateur réalisant, au cours de la seconde période de traitement, la comparaison du signal correspondant à un point avec un seuil correspondant à ce point, et émettant une information de franchissement dudit seuil.

4. Dispositif selon l'une quelconque des revendications précédentes, caractérisé en ce que le calculateur (23) est constitué d'une table de conversion dont la fonction de transfert est une fonction de division de la somme conservée dans la mémoire intermédiaire (22) par le nombre de prises de vues effectuées par le capteur d'images (3) au cours de la première période de traitement, pour chaque point du capteur d'images linéaires (3).

5. Dispositif selon la revendication 3 caractérisé en ce que la mémoire de seuils (26) est constituée d'une table de conversion dont la fonction de transfert fait correspondre à chaque valeur de moyenne au moins une valeur de seuil.

6. Dispositif selon la revendication 3, caractérisé en ce que la mémoire intermédiaire de franchissement de seuils (27) conserve uniquement les informations correspondant aux points qui, en comparaison avec le point précédent du capteur d'images (3), ne correspondent pas aux mêmes informations de franchissement de seuil.

7. Dispositif selon l'une quelconque des revendications précédentes caractérisé en ce qu'il comporte un ordinateur (14) adapté à initialiser les valeurs conservées dans les différentes mémoires et à traiter les informations de franchissement de seuils.

## Patentansprüche

1. Vorrichtung zur Informationsverarbeitung von linearen Bildern mit Mantellinien eines eine Drehachse besitzenden Teiles (4):
- mit einem Linearbildaufnehmer (3), der strahlungsempfindliche Stellen aufweist;
- mit einem Bildspeicher (21), der alle Bildinformationen festhält, die bei einer ersten einer vollständigen Drehung des Teiles (4) entsprechenden Verarbeitungsphase von dem Bildaufnehmer (3) ausgehen, und sie bei einer sich der ersten anschließenden Verarbeitungsphase wiedergeben kann;
- mit einem Zwischenspeicher (22), der derart ausgebildet ist, daß er für jeden strahlungsempfindlichen Punkt des Bildaufnehmers (3) die Summe der Werte der von diesem Punkt bei der ersten Verarbeitungsphase kommenden Informationen errechnet;
- mit einem Rechner (23), der mit dem Zwischenspeicher verbunden und dafür geeignet ist, für jeden strahlungsempfindlichen Punkt des Bildaufnehmers (3) den Mittelwert der bei der ersten, einer vollständigen Drehung des Teiles (4) entsprechenden Verarbeitungsphase von diesem Punkt ausgehenden Informationen zu ermitteln;
- mit einem Speicher (24), der mit dem Rechner (23) verbunden ist und dafür geeignet ist, die besagten Mittelwerte zu speichern;
dadurch gekennzeichnet, daß der Speicher (24) ein Härtespeicher ist, der für jeden strahlungsempfindlichen Punkt des Bildaufnehmers (3) einen Härtegrad in Änderungsprozent um den gespeicherten Mittelwert festhält.

2. Vorrichtung nach Anspruch 1, dadurch gekennzeichnet, daß sie einen mit dem Speicher (24) verbundenen Schwellenrechner (25) umfaßt, der zur Berechnung der Schwellenanzahl für jeden strahlungsempfindlichen Punkt des Bildaufnehmers den Mittelwert für jeden strahlungsempfindlichen Punkt durch die Anzahl von entsprechenden Härtegraden multipliziert.

3. Vorrichtung nach Anspruch 1 oder Anspruch 2, dadurch gekennzeichnet, daß sie folgendes umfaßt:
- einen Schwellenspeicher (26), der mit dem Schwellenrechner (25) verbunden ist, und für jeden strahlungsempfindlichen Punkt des Bildaufnehmers (3) wenigstens eine Schwelle festhält;
- einen Zwischenspeicher (27) zur Schwellenüberschreitung, der mit dem Schwellenspeicher (26) verbunden ist und wenigstens eine Vergleichseinrichtung umfaßt, die bei der zweiten Verarbeitungsphase den Vergleich des einem Punkt entsprechenden Signals mit einer diesem Punkt entsprechenden Schwelle vornimmt und eine Information zur Überschreitung der besagten Schwelle abgibt.

4. Einrichtung nach irgendeinem der vorgehenden Ansprüche, dadurch gekennzeichnet, daß der Rechner (23) aus einer Umrechnungstabelle besteht, deren Transferfunktion eine Funktion zur Teilung der im Zwischenspeicher (22) festgehaltenen Summe durch die Anzahl der von dem Bildaufnehmer (3) bei der ersten Verarbeitungsphase durchgeführten Aufnahmen für jeden strahlungsempfindlichen Punkt des Bildaufnehmers (3) ist.

5. Einrichtung nach dem Anspruch 3, dadurch gekennzeichnet, daß der Schwellenspeicher (26) aus einer Umrechnungstabelle besteht, deren Transferfunktion jeden Mittelwert wenigstens mit einem Schwellenwert in Übereinstimmung bringt.

6. Einrichtung nach dem Anspruch 3, dadurch gekennzeichnet, daß der Zwischenspeicher (27) zur Schwellenüberschreitung nur die Informationen festhält, die den Punkten entsprechen, die im Vergleich zu dem vorgehenden Punkt des Bildaufnehmers (3) den gleichen Informationen von Schwellenüberschreitungen nicht entsprechen.

7. Einrichtung nach irgendeinem der vorgehenden Ansprüche, dadurch gekennzeichnet, daß sie einen Computer (14) umfaßt, der zur Initialisierung der in den einzelnen Speichern festgehaltenen Werte und zur Verarbeitung der Informationen von Schwellenüberschreitungen ausgebildet ist.

## Claims

1. Device for processing linear image information for generating an element (4) having a revolution axis, said device comprising :
- a linear image sensor (3) having photosensitive points ;
- an image memory (21) able to retain all the image information derived from the linear image sensor (3) during a first processing period corresponding to a complete rotation of the element (4), and restoring them during a second successive processing period ;
- an intermediate memory (22) able to calculate for each photo-sensitive point of the image sensor (3) the sum of the values of the information derived from this point during the first processing period;
- a computer (23) connected to the intermediate memory (22) and adapted to calculate for each photosensitive point of the linear image sensor (3) the mean value of the image information derived from this point during the first processing period corresponding to a complete rotation of the element (4) ;
- a memory (24) connected to the computer (23) and able to store said mean values,
characterised in that the memory (24) is a severity memory which retains for each photosensitive point of the image sensor a severity rate expressed as a percentage varying from the stored mean value.

2. Device according to claim 1, characterised in that it comprises a threshold computer (25) connected to the memory (24) and able to calculate the number of thresholds for each photosensitive point of the linear image sensor by multiplying the mean value for each photosensitive point by the corresponding severity percentages.

3. Device according to claim 1 or 2, characterised in that it comprises:
- a threshold memory (26) connected to the threshold computer (25) and retaining at least one threshold for each photosensitive point of the linear image sensor (3);
- a crossing threshold intermediate memory (27) connected to the threshold memory (26) and comprising at least one comparator making, during the second processing period, a comparison of the signal corresponding to a point with a threshold corresponding to this point and emitting information for crossing said threshold.

4. Device according to one of the preceding claims, characterised in that the computer (23) is made up of a conversion table whose transfer function is a function for dividing the sum retained in the intermediate memory (22) by the number of shots taken by the image sensor (3) during the first processing period for each point of the linear image sensor (3).

5. Device according to claim 3, characterised in that the threshold memory (26) is made up of a conversion table whose transfer function makes at least one threshold value correspond to each mean value.

6. Device according to claim 3, characterised in that the threshold crossing intermediate memory (27) solely retains information corresponding to the points which, on comparison with the preceding point of the image sensor (3), does not correspond to the threshold information.

7. Device according to one of the preceding claims, characterised in that it comprises a computer (14) able to initialise the values retained in the various memories and for processing the threshold crossing information.
